Europäisches Patentamt

European Patent Office

Office européen des brevets

(19)

(11) **EP 1 252 264 B1**

(12) **EUROPÄISCHE PATENTSCHRIFT**

(45) Veröffentlichungstag und Bekanntmachung des
Hinweises auf die Patenterteilung:
**14.04.2004 Patentblatt 2004/16**

(21) Anmeldenummer: **01909604.9**

(22) Anmeldetag: **11.01.2001**

(51) Int Cl.⁷: **C10K 1/06**, B01D 47/12,
C10J 3/84, C10B 53/00

(86) Internationale Anmeldenummer:
**PCT/EP2001/000273**

(87) Internationale Veröffentlichungsnummer:
**WO 2001/057161 (09.08.2001 Gazette 2001/32)**

(54) **2-STUFIGE SYNTHESEGASKÜHLUNG**

2-STAGE COOLING PROCESS FOR SYNTHESIS GAS

REFROIDISSEMENT DE GAZ DE SYNTHESE EN DEUX ETAPES

(84) Benannte Vertragsstaaten:
**AT BE CH CY DE DK ES FI FR GB GR IE IT LI LU
MC NL PT SE TR**

(30) Priorität: **31.01.2000 DE 10004138**

(43) Veröffentlichungstag der Anmeldung:
**30.10.2002 Patentblatt 2002/44**

(73) Patentinhaber: **THERMOSELECT
AKTIENGESELLSCHAFT
FL-9490 Vaduz (LI)**

(72) Erfinder: **KISS, Günter, H.
CH-6648 Minusio (CH)**

(74) Vertreter: **Pfenning, Meinig & Partner GbR
Mozartstrasse 17
80336 München (DE)**

(56) Entgegenhaltungen:
**EP-A- 0 412 587          EP-A- 0 520 086
DE-C- 3 923 840          HU-B- 213 189
US-A- 4 175 929**

**Beschreibung**

Die vorliegende Erfindung bezieht sich auf ein Verfahren und eine Vorrichtung zur Entsorgung und Nutzbarmachung von Abfallgütern aller Art, bei dem unsortierter, unbehandelter, beliebige Schadstoffe in fester und/oder flüssiger Form enthaltender Industrie-, Haus- und/oder Sondermüll sowie Industriegüterwracks einer stufenweisen Temperaturbeaufschlagung und thermischen Trennung bzw. Stoffumwandlung unterzogen werden.

Insbesondere bezieht sich die Erfindung auf ein Verfahren zur Vermeidung der Emission von COS in den in die Umwelt entlassenen Abgasen.

Weiterhin bezieht sich die vorliegende Erfindung auf eine für das obige Verfahren geeignete Vorrichtung.

Die bekannten Verfahren der Abfallentsorgung bilden keine befriedigende Lösung der wachsenden Müllprobleme, die ein wesentlicher Faktor der Umweltzerstörung sind. Industriegüterwracks aus Verbundwerkstoffen, wie Kraftfahrzeuge und Haushaltsgeräte aber auch Öle, Batterien, Lacke, Farben, toxische Schlämme, Medikamente und Krankenhausabfälle, unterliegen gesonderten, gesetzlich streng vorgeschriebenen Entsorgungsmaßnahmen.

Hausmüll hingegen ist ein unkontrolliertes heterogenes Gemisch, das nahezu alle Arten von Sondermüllfraktionen und organischen Bestandteilen enthalten kann und ist bezüglich der Entsorgung noch in keinem Verhältnis zu seiner Umweltbelastung eingestuft.

Eines der Entsorgungs- und Verwertungsverfahren für Abfallgüter ist die Müllverbrennung. Bei den bekannten Müllverbrennungsanlagen durchlaufen die Entsorgungsgüter ein breites Temperaturfeld bis zu ca. 1000 °C. Bei diesen Temperaturen sollen mineralische und metallische Reststoffe nicht aufgeschmolzen werden, um nachfolgende Gaserzeugungsstufen möglichst nicht zu stören. Die den verbleibenden Feststoffen innewohnende Energie wird nicht oder nur mangelhaft genutzt.

Eine kurze Verweilzeit des Mülls bei höheren Temperaturen und die hohe Staubentwicklung durch die Vorgabe großer Mengen stickstoffreicher Verbrennungsluft in die unverdichteten Abfallverbrennungsgüter begünstigen die gefährliche Bildung von chlorierten Kohlenwasserstoffen. Man ist deshalb dazu übergegangen, die Abgase von Müllverbrennungsanlagen einer Nachverbrennung bei höheren Temperaturen zu unterziehen. Um die hohen Investitionen solcher Anlagen zu rechtfertigen, werden die abrasiven und korrosiven heißen Abgase mit ihrem hohen Staubanteil durch Wärmetauscher geleitet. Bei der relativ langen Verweilzeit im Wärmetauscher bilden sich erneut chlorierte Kohlenwasserstoffe, die sich mit den mitgeführten Stäuben verbinden und letztlich zu Verstopfungen und Funktionsstörungen führen und als hochgiftige Schadstoffe entsorgt werden müssen. Folgeschäden und die Kosten ihrer Beseitigung sind nicht abschätzbar.

Bisherige Pyrolyseverfahren in konventionellen Reaktoren haben ein der Müllverbrennung ähnlich breites Temperaturspektrum. In der Entgasungszone herrschen hohe Temperaturen. Die sich bildenden heißen Gase werden zur Vorwärmung des noch nicht pyrolysierten Entsorgungsgutes genutzt, kühlen hierbei ab und durchlaufen ebenfalls den für die Neubildung chlorierter Kohlenwasserstoffe relevanten und damit gefährlichen Temperaturbereich. Um ein ökologisch bedenkenlos nutzbares Reingas herzustellen, durchlaufen Pyrolysegase im Regelfall vor der Reinigung einen Cracker.

Gemeinsam weisen die vorbeschriebenen Verbrennungsund Pyrolyseverfahren den Nachteil auf, daß sich die bei der Verbrennung oder pyrolytischen Zersetzung verdampften Flüssigkeiten oder Feststoffe mit den Verbrennungs- oder Pyrolysegasen vermischen und abgeleitet werden, bevor sie die zur Zerstörung aller Schadstoffe notwendige Temperatur und Verweilzeit im Reaktor erreicht haben. Das verdampfte Wasser ist nicht zur Wassergasbildung nutzbar gemacht. Deshalb werden im Regelfall bei Müllverbrennungsanlagen Nachverbrennungskammern und bei Pyrolyseanlagen Crackerstufen nachgeschaltet.

Aus der EP 91 11 8158.4 (EP-A-0 520 086) ist ein Verfahren zur Entsorgung und Nutzbarmachung von Abfallgütern bekannt, das die oben geschilderten Nachteile vermeidet. Dabei werden die Abfallgüter einer stufenweisen Temperaturbeaufschlagung und thermischen Trennung bzw. Stoffumwandlung unterzogen und die anfallenden festen Rückstände in eine Hochtemperaturschmelze überführt. Hierzu wird das zu entsorgende Gut chargenweise zu Kompaktpaketen komprimiert und durchläuft die Temperaturbehandlungsstufen in Richtung steigender Temperatur von einer Niedertemperaturstufe, in der unter Aufrechterhaltung der Druckbeaufschlagung ein formund kraftschlüssiger Kontakt mit den Wänden des Reaktionsgefäßes sichergestellt ist und organische Bestandteile entgast werden, zu einer Hochtemperaturzone, in der das entgaste Entsorgungsgut eine gasdurchlässige Schüttung ausbildet und durch kontrollierte Zugabe von Sauerstoff Synthesegas erzeugt wird. Dieses Synthesegas wird dann aus der Hochtemperaturzone abgeleitet und kann weiter verwertet werden.

Diese Ableitung des Rohsynthesegases des Hochtemperaturreaktors ist ihrerseits fest mit einer Gaskammer zur Gasschnellkühlung verbunden, die eine Wasserinjektionseinrichtung für Kaltwasser in den heißen Rohsynthesegasstrom besitzt. Diese Gasschnellkühlung (Schockkühlung) verhindert eine erneute Synthese von Schadstoffen, da das Rohsynthesegas durch die Schockkühlung den kritischen Temperaturbereich sehr rasch durchläuft und auf eine Temperatur abgekühlt wird, bei der eine Neusynthese der Schadstoffe nicht mehr stattfindet. Diese Kaltwasserinjektion in den Rohsynthesegasstrom bindet zusätzlich im Gasstrom mitgeführte Flüssigkeits- oder Feststoffpartikel, so daß nach der Schnellkühlung ein gut vorgereinigtes Rohsynthesegas erhalten wird.

Bei dieser in der EP 91 11 8158.4 beschriebenen Anlage können aus den im Müll enthaltenen Schwefelanteilen nicht nur $H_2S$ sondern auch geringe Spuren von COS gebildet werden, die den Vergasungsbereich in gasförmiger Form mit dem gebildeten Synthesegas verlassen.

Die im Syntheserohgas vorhandenen $H_2S$-Bestandteile werden anschließend in einer Gaswäsche mit Eisenchelat vollständig aufgenommen und zu elementarem Schwefel oxidiert und dadurch aus dem Syntheserohgas entfernt, während das COS nur teilweise von dem Eisenchelat gebunden und/oder zersetzt wird. Das nichtaufgenommene COS verbleibt im Synthesegas und wird bei der anschließenden, beispielsweise thermischen Nutzung des Synthesegases in $SO_2$ transformiert und als Schadstoff in die Atmosphäre abgegeben.

Aufgabe der vorliegenden Erfindung ist es daher, ein Verfahren und eine Vorrichtung vorzuschlagen, mit denen der erfindungsgemäße Entsorgungs- und Nutzbarmachungsprozeß ohne schädliche Emissionen von $SO_2$ durchgeführt werden kann.

Diese Aufgabe wird durch das Verfahren nach Anspruch 1 und die Vorrichtung nach Anspruch 12 gelöst. Vorteilhafte Weiterbildungen des erfindungsgemäßen Verfahrens und der erfindungsgemäßen Vorrichtung werden in den jeweiligen abhängigen Ansprüchen gegeben.

Das erfindungsgemäße Verfahren schließt sich inhaltlich an das in der EP 91 11 8158.4 offenbarte Verfahren an, wobei bezüglich des Verfahrens und der Vorrichtung die Offenbarung dieser Druckschrift hiermit vollständig in den Offenbarungsgehalt dieser Anmeldung eingeschlossen wird.

Erfindungsgemäß wird die oben genannte Schadstoffbelastung vermieden, indem das in dem Hochtemperaturreaktor erzeugte Synthesegas einer 2-stufigen schockartigen Wasserbeaufschlagung zur Abkühlung unterworfen wird. In einer ersten schockartigen Abkühlung wird das Synthesegas auf eine Temperatur zwischen 150 °C bis 200 °C abgekühlt und verweilt dort für eine vorbestimmte Zeit. Anschließend erfolgt eine weitere schockartige Wasserbeaufschlagung bis zur Abkühlung unter 90 °C.

Durch die schockartige Abkühlung wird die Neubildung von Dioxinen und Furanen in dem Synthesegas ausgeschlossen. Dadurch, daß das Synthesegas in einem ersten Schritt auf eine Temperatur zwischen 150 °C und 200 °C abgekühlt wird, wird anschließend das in dem Synthesegas enthaltene COS unter Anwesenheit von Wasserdampf gemäß der folgenden Gleichung

$$COS + H_2O \rightarrow CO_2 + H_2S$$

in Schwefelwasserstoff transformiert.

Um diese Transformation zu erreichen wird in einer ersten Abkühlstufe vorteilhafterweise gasvolumenabhängig soviel Wasser in den Gasstrom eingedüst, daß das Gas schockartig auf die genannte Temperatur zwischen 150 °C und < 200 °C abgekühlt wird. Durch diese Eindüsung von Kühlwasser enthält das abgekühlte Syntheserohgas bereits den für die Umwandlung von COS erforderlichen hohen Wasserdampfanteil um COS in $H_2S$ zu transformieren.

Anschließend wird die Endtemperatur des Syntheserohgases unterhalb von 90 °C durch eine zweite schockartige Wasserabkühlung mittels Eindüsen von Kühlwasser durchgeführt.

Da nunmehr im Syntheserohgas Schwefelwasserstoff vorliegt und dieser in einer anschließenden Gasreinigungsstufe mittels Eisenchelat entfernt wird, enthält anschließend das Syntheserohgas keine nennenswerten COS-$H_2S$- Anteile. Damit wird auch bei der anschließenden thermischen Nutzung des Syntheserohgases die Bildung von $SO_2$ vermieden und das Abgas aus der thermischen Nutzung von sonst üblichen $SO_2$-Anteilen befreit.

Idealerweise erfolgt die Wassereindüsung in beiden Stufen der Schnellabkühlung mittels einer Vielzahl von Düsen die zu- oder abschaltbar sind. In diesem Falle kann über eine Regelung der Zu- bzw. Abschaltung einzelner Düsen die in das Synthesegas injizierte Wassermenge derart geregelt werden, daß die gewünschten Endtemperaturen des Synthesegases zwischen 150 °C und 200 °C für die erste Wasserabkühlung bzw. < 90 °C für die zweite Wasserabkühlung erzielt werden.

Im folgenden werden einige Beispiele für das erfindungsgemäße Verfahren und die erfindungsgemäße Vorrichtung beschrieben werden.

Es zeigen

Figur 1 eine erfindungsgemäße Vorrichtung; und

Figur 2 eine erfindungsgemäße Gasschnellabkühlung.

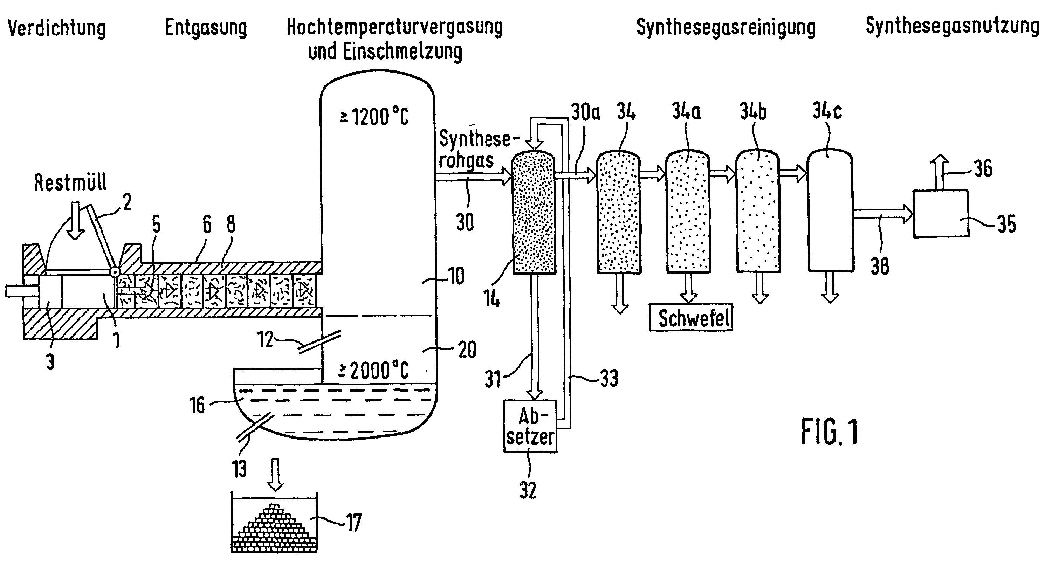

Figur 1 zeigt eine erfindungsgemäße Vorrichtung zur Stoffaufbereitung, -wandlung und -nachbehandlung mit einem Hochtemperaturreaktor 10.

In Figur 1 ist gezeigt, wie Restmüll in eine Verdichtungspresse eingebracht wird. Dabei erfolgt die Verdichtung durch eine Verdichtungspresse 1, die in ihrem Aufbau einer an sich bekannten Schrottpresse entspricht, wie sie z.B. für die Verschrottung von Fahrzeugen eingesetzt wird. Eine schwenkbare Preßplatte 2 ermöglicht das Beschicken der Presse 1 mit Mischabfall. Eine Preßfläche 3 befindet sich in linker Position, so daß der Beschickungsraum der Presse voll geöffnet ist. Durch das Einschwenken der Preßplatte 2 in die dargestellte horizontale Position wird der Abfall zunächst in vertikaler Richtung verdichtet. Danach bewegt sich die Preßfläche 3 horizontal in die in ausgezogener Linienführung dargestellte Lage und verdichtet das Abfallpaket in horizontaler Richtung. Die hierzu benötigten Gegenkräfte werden durch eine nicht dargestellte aus- und einfahrbare Gegenplatte aufgenommen. Nachdem der Verdichtungsvorgang abgeschlossen ist, wird die Gegenplatte ausgefahren und der verdichtete Abfallpfropfen mit Hilfe der sich nach rechts weiterbewegenden Preßfläche 3 in einen unbeheizten Bereich 5 des Schubofens 6 eingeschoben und so dessen Gesamtinhalt entsprechend weitertransportiert, nachverdichtet und mit der Kanal- bzw. Ofenwand in Druckkontakt gehalten. Anschließend wird die Preßfläche 3 in die linke Endposition zurückgefahren, die Gegenplatte eingefahren und die Preßplatte 2 in die Vertikalposition zurückgeschwenkt. Die Verdichtungspresse 1 ist damit für eine Neubeschickung bereit. Die Abfallverdichtung ist so groß, daß der in den unbeheizten Bereich 5 des Schubofens 6 eingeschobene Abfallpfropfen gasdicht ist. Die Beheizung des Schubofens erfolgt durch Flamm- und/oder Abgase, die einen Heizmantel 8 in Pfeilrichtung durchströmen.

Beim Durchschub des verdichteten Abfalles durch den Ofenkanal 6 breitet sich eine entgaste Zone zur Mittelebene des Schubofens 6 hin aus, begünstigt durch die mit dem Seiten/Höhen-Verhältnis >2 seines Rechteckquerschnittes verbundene große Oberfläche. Beim Eintritt in einen Hochtemperaturreaktor 10 liegt ein durch ständige Druckbeaufschlagung beim Durchschub kompaktiertes Gemisch von Kohlenstoff, Mineralien, Metallen und teilzersetzten vergasungsfähigen Komponenten vor. Dieses Gemisch wird im Bereich der Eintrittsöffnung in den Hochtemperaturreaktor 10 extrem großer Strahlungshitze ausgesetzt. Die hiermit verbundene plötzliche Expansion von Restgasen im Schwelgut führt zu dessen stückiger Zerteilung. Das so erhaltene Feststoff-Stückgut bildet im Hochtemperaturreaktor ein gasdurchlässiges Bett 20, in dem der Kohlenstoff des Schwelgutes mit Hilfe von Sauerstofflanzen 12 zunächst zu $CO_2$ bzw. CO verbrannt wird. Die oberhalb des Bettes 20 den Reaktor 10 verwirbelt durchströmenden Schwelgase werden durch Cracken vollständig entgiftet. Zwischen C, $CO_2$, CO und dem aus dem Abfall ausgetriebenen Wasserdampf stellt sich ein temperaturbedingtes Reaktionsgleichgewicht bei der Synthesegasbildung ein.

In dem mehr als 2000 °C heißen Kernbereich des Bettes 20 werden die mineralischen und metallischen Bestandteile des Schwelgutes aufgeschmolzen. Aufgrund der unterschiedlichen Dichte überschichten sie sich dabei und entmischen sich. Typische Legierungselemente des Eisens, wie beispielsweise Chrom, Nickel und Kupfer, bilden mit dem Eisen des Abfalles eine verhüttbare Legierung, andere Metallverbindungen, beispielsweise Aluminium, oxidieren und stabilisieren als Oxide die Mineralschmelze.

Die Schmelzen treten direkt in einen Nachbehandlungsreaktor 16 ein, in dem sie in einer mit Hilfe einer $O_2$-Lanze 13 eingebrachten Sauerstoffatmosphäre, gegebenenfalls unterstützt durch nicht dargestellte Gasbrenner, Temperaturen von mehr als 1400 °C ausgesetzt werden. Mitgeschleppte Kohlenstoffpartikel werden oxidiert, die Schmelze wird homogenisiert und in ihrer Viskosität erniedrigt.

Bei ihrem gemeinsamen Austrag in ein Wasserbad 17 granulieren Mineralstoff und Eisenschmelze getrennt und können danach magnetisch sortiert werden.

Das im oberen Teil des Hochtemperaturreaktors 10, der einen Stabilisierungsbereich bildet, erzeugte Rohsynthesegas wird über eine Rohsynthesegasleitung 30 zu einem Behälter bzw. Kammer 14 geleitet, in dem das Synthesegas durch Wassereindüsung 2-stufig auf weniger als 90 °C schockartig gekühlt wird. Im Gas mitgeschleppte Bestandteile (Mineralien und/oder Metall in geschmolzenem Zustand) werden im Kühlwasser abgeschieden, Wasserdampf kondensiert, so daß sich das Gasvolumen verringert und so die Gasreinigung erleichtert wird, die sich an die Schockkühlung in an sich bekannten Anordnungen anschließen kann. Das zur schockartigen Kühlung des Synthesegasstromes verwendete Wasser kann gegebenenfalls nach Aufreinigung, beispielsweise in einem Absetzer 32, wiederum zur Kühlung verwendet und folglich im Kreislauf geführt werden. Bei der Schnellabkühlung des Rohsynthesegases durch Einsprühen von Kühlwasser in den Rohsynthesegasstrom werden nicht nur Flüssigbestandteile und Feststoffbestandteile (Stäube etc.) aus dem Rohsynthesegas entfernt, sondern das Kühlwasser nimmt zusätzlich auch Gasbestandteile aus dem Rohsynthesegas auf. Dies erfolgt beispielsweise durch Emulgieren von feinsten Gasbläschen in dem Kühlwasser bzw. durch Lösung von Gasen aus dem Rohsynthesegas.

In der Kammer 14 erfolgt die Abkühlung auf unter 90 °C in einem 2-stufigen Verfahren. In einer ersten Stufe wird Wasser in das Synthesegas injiziert, so daß das Synthesegas sich auf eine Temperatur zwischen 150 °C und 200 °C abkühlt. Dann verweilt das so abgekühlte Synthesegas bei dieser Temperatur, bis das im Synthesegas enthaltene COS in $H_2S$ umgewandelt worden ist. Anschließend erfolgt die zweite Stufe der schockartigen Schnellabkühlung durch weitere Injektion von Kühlwasser zur Abkühlung des Synthesegases auf unter 90 °C.

Das Kühlwasser wird aus dem Behälter 14 über eine Leitung 31 in einen Beruhigungsbereich, hier einen Lamellenklärer 32, geleitet, wo die in ihm enthaltenen Feststoffe, z.B. Schwebebestandteile, sich absetzen und die aufgenommenen Gase aus dem Kühlwasser ausgasen. Das so aufgereinigte Kühlwasser wird über eine Leitung 33 in den Behälter 14 wieder zur Kühlung des Rohsynthesegases zurückgeleitet und folglich in einem Kreislauf geführt.

Das in der Kammer 14 gereinigte Rohsynthesegas verläßt den Behälter 14 über eine Leitung 30a und wird anschließend einer Feinwäsche bzw. Feinreinigung in Wäschern 34, 34a, 34b und 34c unterzogen. Der Wäscher 34a ist dabei eine Waschstufe, bei der dem Rohsynthesegas mittels Eisenchelat das $H_2S$ entzogen wird, das anschließend als reiner Schwefel ausgetragen werden kann.

Die so fein gereinigten Synthesegase können über eine Leitung 38 der Nutzung, beispielsweise in einem Gasgenerator 35, zugeführt werden oder auch im Störungsfalle einer Brennkammer mit Kamin zugeführt werden, wo sie unter Zwangsluftzufuhr ökologisch unbedenklich verbrannt und entsorgt werden können.

Da das Synthesegas frei von COS und $H_2S$ ist, enthalten die Abgase aus der Synthesegasnutzung, beispielsweise die Abgase des Gasgenerators 35 keine nennenswerten Schwefeldioxid-Anteile mehr und sind bezüglich der Schwefelanteile emissionsfrei. Sie können unmittelbar, d.h. ohne Rauchgasreinigung über einen Schornstein 36 in die Umwelt entlassen werden.

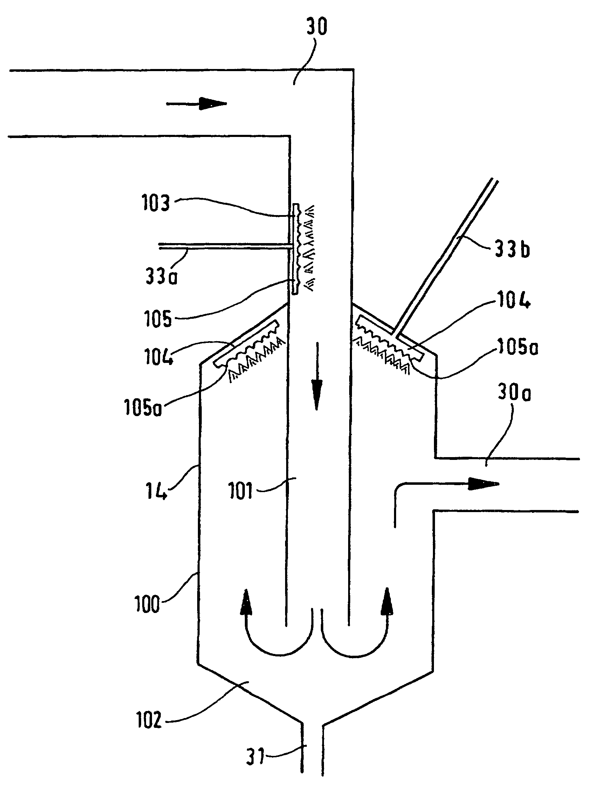

Figur 2 zeigt eine Kammer 14 mit 2-stufiger Schnellabkühlung, wobei in Figur 2 dieselben Elemente mit denselben Bezugszeichen wie in Figur 1 bezeichnet und daher nicht weiter beschrieben werden.

Die noch ungereinigten Synthesegase treten über die Leitung 30 und ein Zentralrohr 101 in die Kammer 14 ein. Innerhalb des Zentralrohres ist eine erste Wasserinjektionseinrichtung 103 mit Wasserdüsen 105 angeordnet. Diese Wasserinjektionseinrichtung 103 wird über eine Leitung 33a mit Kühlwasser versorgt und sprüht Kühlwasser in den Synthesegasstrom in dem Zentralrohr 101. Mittels Zu- und Abschalten einzelner Wasserdüsen 105 wird dabei der Wasserstrom so eingeregelt, daß die durch das Kühlwasser abgekühlten Synthesegase eine Temperatur zwischen 150 °C und 200 °C aufweisen. Die so erstmals schockartig auf 150 °C bis 200 °C abgekühlten Synthesegasrohre strömen entlang des Zentralrohres 101, wobei das in dem Synthesegas enthaltene COS zu $H_2S$ umgesetzt wird. Über das Volumen oder die Länge des Zentralrohres 101 läßt sich die Verweilzeit des Synthesegases bei 150 °C bis 200 °C so einregeln, daß das Synthesegas erst dann in die zweite Stufe der Schnellabkühlung eintritt, wenn das enthaltene COS vollständig abgebaut ist.

Am Ende des Zentralrohres 101 tritt das Synthesegas in das das Zentralrohr 101 umgebende Volumen der Kammer 14 ein, und wird dort über eine zweite Wasserinjektionseinrichtung 104 mit Wasserdüsen 105a mit Wasser besprüht und schockartig auf Temperaturen unter 90 °C abgekühlt. Die Wasserinjektionseinrichtung 104 wird dabei über eine Kühlwasserzuleitung 33b mit Kühlwasser versorgt. Auch hier wird die über die Düsen 105a eingesprühte Kühlwassermenge mittels Zu- und Abschalten einzelner Düsen 105a derart eingeregelt, daß die Temperatur des abgekühlten Synthesegases unter 90 °C liegt. Damit kann in dem Synthesegas keine erneute Synthese von Dioxinen oder Furanen stattfinden.

Das so auf unter 90 °C abgekühlte Synthesegas verläßt über die Leitung 30a die Kammer 14 in Richtung der Gasfeinwäscher 34 bis 34c aus Figur 1.

Die Kammer 14 weist weiterhin einen Sumpf 102 und eine Auslaßleitung 31 auf, über die das eingesprühte Kühlwasser gesammelt und abgeleitet wird (siehe Figur 1).

## Patentansprüche

1. Verfahren zur Entsorgung und Nutzbarmachung von Abfallgütern aller Art, bei dem unsortierter, unbehandelter, beliebige Schadstoffe in fester und/oder flüssiger Form enthaltender Industrie-, Hausund/oder Sondermüll sowie Industriegüterwracks einer stufenweisen Temperaturbeaufschlagung und thermischen Trennung bzw. Stoffumwandlung unterzogen werden und die anfallenden festen Rückstände in eine Hochtemperaturschmelze überführt werden, wobei das Entsorgungsgut chargenweise zu Kompaktpaketen komprimiert die Temperaturbehandlungsstufen in Richtung steigender Temperatur mit mindestens einer Niedertemperaturstufe, in der unter Aufrechterhaltung der Druckbeaufschlagung ein form- und kraftschlüssiger Kontakt mit den Wänden des Reaktionsgefäßes sichergestellt ist, und mit mindestens einer Hochtemperaturzone, in der das Entsorgungsgut Synthesegas erzeugt und eine gasdurchlässige Schüttung sowie eine oberhalb der Schüttung befindliche Stabilisierungszone für die Synthesegase ausbildet, durchlaufen werden, und das erzeugte Synthesegas aus der Stabilisierungszone abgeleitet wird, **dadurch gekennzeichnet, daß** das abgeleitete Synthesegas unmittelbar nach Verlassen des Hochtemperaturreaktors einer ersten schockartigen Wasserbeaufschlagung bis zur Abkühlung auf 150 °C bis 200 °C und anschließend einer zweiten schockartigen Wasserbeaufschlagung bis zur Abkühlung unter 90 °C unterworfen wird.

2. Verfahren nach dem vorhergehenden Anspruch, **dadurch gekennzeichnet, daß** das abgeleitete Synthesegas zwischen der ersten und der zweiten Wasserbeaufschlagung für eine vorbestimmte Zeitdauer bei ca. 150 °C bis 200 °C verweilt.

3. Verfahren nach einem der vorhergehenden Ansprüche, **dadurch gekennzeichnet, daß** die zur ersten und/oder zweiten Wasserbeaufschlagung eingesetzte Wassermenge in Abhängigkeit vom Volumenstrom des Synthesegases geregelt wird.

4. Verfahren nach einem der vorhergehenden Ansprüche, **dadurch gekennzeichnet, daß** die Beaufschlagung des Synthesegases mit Wasser über eine Vielzahl von Düsen erfolgt.

**5.** Verfahren nach dem vorhergehenden Anspruch, **dadurch gekennzeichnet, daß** die beaufschlagte Wassermenge durch Zu- bzw. Abschalten einzelner Düsen unter Konstanthaltung der durch jede zugeschaltete Düse beaufschlagten Wassermenge variiert wird.

**6.** Verfahren nach einem der vorhergehenden Ansprüche, **dadurch gekennzeichnet, daß** im Anschluß an die zweite Wasserbeaufschlagung der in dem Synthesegas enthaltene Schwefelwasserstoff ($H_2S$) mittels Eisenchelat aus dem Synthesegas entfernt wird.

**7.** Verfahren nach einem der vorhergehenden Ansprüche, **dadurch gekennzeichnet, daß** im Normalbetrieb zumindest die Niedertemperaturstufe unter Aufrechterhaltung der Druckbeaufschlagung in form- und kraftschlüssigem Kontakt mit den Wänden des Reaktorgefäßes unter Sauerstoffabschluß durchlaufen wird.

**8.** Verfahren nach einem der vorhergehenden Ansprüche, **dadurch gekennzeichnet, daß** im Normalbetrieb die Niedertemperaturstufe im Temperaturbereich zwischen 100 °C und 600 °C durchlaufen wird.

**9.** Verfahren nach einem der vorhergehenden Ansprüche, **dadurch gekennzeichnet, daß** im Normalbetrieb die Hochtemperaturstufe unter Sauerstoffzugabe durchlaufen wird.

**10.** Verfahren nach dem vorhergehenden Anspruch, **dadurch gekennzeichnet, daß** im Normalbetrieb die Kohlenstoffanteile in der Schüttung durch dosierte Zugabe von Sauerstoff zu Kohlendioxid vergast werden, so daß das Kohlendioxid beim Durchdringen der kohlenstoffhaltigen Schüttung in Kohlenmonoxid reduziert wird.

**11.** Verfahren nach einem der vorhergehenden Ansprüche, **dadurch gekennzeichnet, daß** im Normalbetrieb die Hochtemperaturstufe bei Temperaturen von mehr als 1000 °C durchlaufen wird.

**12.** Vorrichtung zur Stoffaufbereitung, -wandlung und -nachbehandlung von Entsorgungsgut aller Art mit mehreren thermischen Behandlungsstufen, die mindestens eine Niedertemperaturstufe unter Sauerstoffabschluß und mindestens eine Hochtemperaturstufe unter Sauerstoffzufuhr bei Temperaturen über 1000 °C umfassen, sowie mit einer in der Hochtemperaturstufe angeordneten Stabilisierungszone und einem Auslaß für das in der Hochtemperaturstufe erzeugt Gasgemisch, wobei alle Reaktionsräume der Behandlungsstufen schleusenfrei fest miteinander verbunden sind und in der Hochtemperaturstufe Vorrichtungen zum Einspeisen von Sauerstoff und Vorrichtungen zum Einspeisen von Brennstoff vorgesehen sind, **dadurch gekennzeichnet, daß** die Gasauslaßseite der Hochtemperaturstufe mit einer ersten Gasschnellabkühlung und einer der ersten Gasschnellkühlung im Gasstrom folgenden zweiten Gasschnellabkühlung verbunden ist, die jeweils eine erste bzw. zweite Wasserinjektionseinrichtung für Kaltwasser in den heißen Strom des Gasgemisches bzw. des Abgases aufweisen.

**13.** Vorrichtung nach dem vorhergehenden Anspruch, **dadurch gekennzeichnet, daß** die erste und/oder die zweite Gasschnellabkühlung eine Steuerungsvorrichtung zur Regelung der in dem Strom des Gasgemisches injizierten Menge an Kaltwasser bzw. dessen Stromstärke aufweisen.

**14.** Vorrichtung nach dem vorhergehenden Anspruch, **dadurch gekennzeichnet, daß** die Menge bzw. Stromstärke des injizierten Kaltwassers derart regelbar ist, daß das Synthesegas in der ersten Schnellabkühlung auf ca. 150 °C bis 200 °C und/ oder in der zweiten Schnellabkühlung auf unter 90 °C schockgekühlt wird.

**15.** Vorrichtung nach einem der Ansprüche 12 bis 14, **dadurch gekennzeichnet, daß** die erste und/oder zweite Wasserinjektionseinrichtung eine Vielzahl von Düsen zur Injektion von Wasser in die erste bzw. zweite Schnellabkühlung aufweisen.

**16.** Vorrichtung nach dem vorhergehenden Anspruch, **dadurch gekennzeichnet, daß** die Düsen zu- und abschaltbar sind.

**17.** Vorrichtung nach einem der Ansprüche 12 bis 16, **dadurch gekennzeichnet, daß** der zweiten Gasschnellabkühlung eine Einrichtung zur Gasreinigung nachgeordnet ist.

**18.** Vorrichtung nach dem vorhergehenden Anspruch, **dadurch gekennzeichnet, daß** die Einrichtung zur Gasreinigung eine Reinigungsstufe zur Entfernung von $H_2S$ mittels Eisenchelat aufweist.

**19.** Vorrichtung nach einem der Ansprüche 12 bis 18, **dadurch gekennzeichnet, daß** in der zweiten Gasschnellabkühlung für das Synthesegasgemisch eine Einrichtung zur Gasverwertung, beispielsweise ein Gasmotor, ein Generator oder dergleichen, nachgeordnet ist.

**20.** Vorrichtung nach einem der Ansprüche 12 bis 19, **dadurch gekennzeichnet, daß** der Reaktionsraum für die Niedertemperaturstufe ein horizontal angeordneter, außen beheizter Schubofen rechteckigen Querschnittes ist, dessen Verhältnis Ofenbreite zu Ofenhöhe größer zwei ist, wobei die Ofenlänge durch die Beziehung $L_{ofen} \geq 5 \sqrt{F_{Ofen}}$ gegeben ist, mit $F_{Ofen}$ als Querschnittsfläche des Schubofens.

21. Vorrichtung nach einem der Ansprüche 12 bis 20, **dadurch gekennzeichnet, daß** der Reaktionsraum für die Hochtemperaturstufe als vertikaler Schachtofen ausgebildet ist, in den oberhalb seines Bodens der Reaktionsraum für die Niedertemperaturstufe mündet.

**Claims**

1. Method for disposal and utilisation of waste materials of all types in which ungraded, untreated, industrial, domestic and/or special waste, which contain any pollutants in a solid and/or liquid form, and also industrial scrapped goods are subjected to a stepwise temperature application and to thermal separation or material conversion and the occurring solid residues are converted into a high temperature melt, the item for disposal, compressed into compact packets in batches, passing through the temperature treatment stages in the direction of increasing temperature, with at least one low temperature stage in which, whilst maintaining the pressure application, a form-fitting and frictional contact with the walls of the reaction container is ensured, and with at least one high temperature zone, in which the item for disposal produces synthesis gas and forms a gas-permeable bed and also a stabilisation zone for the synthesis gas located above the bed, and the produced synthesis gas being discharged from the stabilisation zone,
   ***characterised in that***,
   the discharged synthesis gas, directly after leaving the high temperature reactor, is subjected to a first shock-like water application until cooling to 150°C to 200°C and subsequently to a second shock-like water application until cooling below 90°C.

2. Method according to the preceding claim, **characterised in that** the discharged synthesis gas remains for a predetermined time at approximately 150°C to 200°C between the first and the second water application.

3. Method according to one of the preceding claims, **characterised in that** the water quantity used for the first and/or the second water application is controlled dependent upon the volume flow of the synthesis gas.

4. Method according to one of the preceding claims, **characterised in that** the application of water to the synthesis gas is effected via a multiplicity of nozzles.

5. Method according to the preceding claim, **characterised in that** the applied water quantity is varied by switching individual nozzles on and off whilst maintaining constant the quantity of water applied by each switched-on nozzle.

6. Method according to one of the preceding claims, **characterised in that**, subsequent to the second water application, the hydrogen sulphide ($H_2S$) contained in the synthesis gas is removed from the synthesis gas by means of iron chelate.

7. Method according to one of the preceding claims, **characterised in that**, in normal operation, at least the low temperature stage is passed through with the exclusion of oxygen whilst maintaining the pressure application in form-fitting and frictional contact with the walls of the reactor container.

8. Method according to one of the preceding claims, **characterised in that**, in normal operation, the low temperature stage is passed through in the temperature range between 100°C and 600°C.

9. Method according to one of the preceding claims, **characterised in that**, in normal operation, the high temperature stage is passed through with the addition of oxygen.

10. Method according to the preceding claim, **characterised in that**, in normal operation, the carbon components in the bed are gasified by metered addition of oxygen into carbon dioxide so that the carbon dioxide when penetrating the carbon-containing bed is reduced to carbon monoxide.

11. Method according to one of the preceding claims, **characterised in that**, in normal operation, the high temperature stage is passed through at temperatures of more than 1000°C.

12. Device for material reprocessing, conversion and subsequent treatment of disposal materials of all types with a plurality of thermal treatment stages, which comprise at least one low temperature stage with oxygen exclusion and at least one high temperature stage with oxygen supply at temperatures above 1000 °C, and also with a stabilisation zone disposed in the high temperature stage and with an outlet for the gas mixture produced in the high temperature stage, all reaction chambers of the treatment stages being connected to each other in a fixed manner without locks and, in the high temperature stage, devices for feeding oxygen and devices for feeding fuel being provided,
   ***characterised in that***

the gas outlet side of the high temperature stage is connected to a first rapid gas cooling and to a second rapid gas cooling following the first rapid gas cooling in the gas flow, which have respectively a first or second water injection device for cold water into the hot flow of the gas mixture or of the waste gas.

13. Device according to the preceding claim, **characterised in that** the first and/or the second rapid gas cooling have a control device for controlling the quantity of cold water injected in the flow of the gas mixture or the flow strength of said water.

14. Device according to the preceding claim, **characterised in that** the quantity or flow strength of the injected cold water is controllable such that the synthesis gas in the first rapid cooling is shock-cooled to approximately 150°C to 200°C and/or in the second rapid cooling to below 90°C.

15. Device according to one of the claims 12 to 14, **characterised in that** the first and/or second water injection device have a multiplicity of nozzles for injection of water into the first or second rapid cooling.

16. Device according to the preceding claim, **characterised in that** the nozzles can be switched on and off.

17. Device according to one of the claims 12 to 16, **characterised in that** a device for gas purification is disposed after the second rapid gas cooling.

18. Device according to the preceding claim, **characterised in that** the device for gas purification has a purification stage for removing $H_2S$ by means of iron chelate.

19. Device according to one of the claims 12 to 18 **characterised in that**, in the second rapid gas cooling, a device for gas utilisation for the synthesis gas mixture, for example a gas motor, a generator or the like, is disposed subsequently.

20. Device according to one of the claims 12 to 19, **characterised in that** the reaction chamber for the low temperature stage is a horizontally disposed, externally heated pusher-type furnace having a rectangular cross-section, the ratio of furnace width to furnace height of which is greater than two, the furnace length being given by the equation $L_{Ofen} \geq 5\sqrt{F_{Ofen}}$, with $F_{Ofen}$ as the cross-sectional surface of the pusher-type furnace.

21. Device according to one of the claims 12 to 20, **characterised in that** the reaction chamber for the high temperature stage is configured as a vertical pit furnace into which the reaction chamber for the low temperature stage opens above its base.

## Revendications

1. Procédé d'élimination et de valorisation de déchets de toute sorte, où les déchets industriels, ménagers, et/ou spéciaux non triés, non traités, et contenant des matières nocives quelconques sous une forme solide et/ou liquide, ainsi que des épaves de produits industriels, sont soumis à une mise à température échelonnée et une séparation thermique ou transformation matérielle thermique échelonnées, et où les résidus solides recueillis sont amenés en une fonte de haute température, les produits à éliminer traversant, par charges et comprimés en paquets compacts, les étages de traitement thermique dans le sens d'une température croissante, comprenant au moins un étage de basse température, où, tout en maintenant la mise sous pression, on assure un contact de conjugaison des formes et de frottement avec les parois du caisson du réacteur, et comprenant au moins une zone de haute température, où les produits à éliminer génèrent du gaz de synthèse et forment une charge en vrac perméable aux gaz, et une zone de stabilisation des gaz de synthèse située au-dessus de la charge en vrac, et le gaz de synthèse ainsi généré étant évacué de la zone de stabilisation,
**caractérisé en ce que**
le gaz de synthèse évacué subit, immédiatement après sa sortie du réacteur de haute température, une première aspersion d'eau de refroidissement brusque provoquant un refroidissement brutal jusqu'à un niveau de 150°C à 200°C, puis une deuxième aspersion d'eau de refroidissement brusque provoquant un refroidissement brutal jusqu'à un niveau inférieur à 90°C.

2. Procédé selon la revendication précédente, **caractérisé en ce que** le gaz de synthèse évacué est maintenu aux alentours de 150°C à 200°C pendant une durée prédéterminée, entre les première et deuxième aspersions d'eau.

3. Procédé selon l'une des revendications précédentes, **caractérisé en ce que** la quantité d'eau employée pour les première et/ou deuxième aspersions d'eau est réglée en fonction du débit du gaz de synthèse.

4. Procédé selon l'une quelconque des revendications précédentes, **caractérisé en ce que** l'aspersion d'eau du gaz de synthèse s'effectue par l'intermédiaire d'une multitude de gicleurs.

5. Procédé selon la revendication précédente, **carac-**

**térisé en ce que** la quantité d'eau d'aspersion est modulée par la mise en marche ou l'arrêt de différents gicleurs individuels, tout en maintenant constant la quantité d'eau d'aspersion débitée à travers chaque gicleur mis en marche.

6. Procédé selon l'une des revendications précédentes, **caractérisé en ce qu'**à la suite de la deuxième aspersion d'eau, l'hydrogène sulfuré ($H_2S$) contenu dans le gaz de synthèse est extrait du gaz de synthèse au moyen de chélate de fer.

7. Procédé selon l'une des revendications précédentes, **caractérisé en ce qu'**en fonctionnement normal, au moins l'étage de basse température est traversé en maintenant la pression, faisant contact de conjugaison des formes et de frottement avec les parois du caisson du réacteur, et à l'abri d'oxygène.

8. Procédé selon l'une des revendications précédentes, **caractérisé en ce qu'**en fonctionnement normal, l'étage de basse température est traversé sur une plage de température comprise entre 100°C et 600°C.

9. Procédé selon l'une des revendications précédentes, **caractérisé en ce qu'**en fonctionnement normal, l'étage de haute température est traversé avec apport d'oxygène.

10. Procédé selon la revendication précédente, **caractérisé en ce qu'**en fonctionnement normal, les parts de carbone contenues dans la charge en vrac sont gazéifiées, par apport dosé d'oxygène, pour former du dioxyde de carbone, de sorte que le dioxyde de carbone soit réduit, lorsqu'il traverse la charge en vrac contenant du carbone, au monoxyde de carbone.

11. Procédé selon l'une des revendications précédentes, **caractérisé en ce qu'**en fonctionnement normal, l'étage de haute température est traversé à des températures de plus de 1000°C.

12. Dispositif de pré-traitement, de transformation et de post-traitement de matières à éliminer de toute sorte, comprenant plusieurs étages de traitement thermique incluant au moins un étage de basse température fonctionnant à l'abri d'oxygène, et au moins un étage de haute température fonctionnant avec apport d'oxygène à des températures supérieures à 1000°C, et une zone de stabilisation agencée à l'intérieur de l'étage de haute température, et une sortie pour le mélange des gaz générés à l'étage de haute température, toutes les chambres de réaction des étages de traitement étant reliées les unes aux autres sans sas et de manière fixe, et des dispositifs d'injection d'oxygène et des dispositifs d'injection de combustible étant prévus dans l'étage de haute température,
**caractérisé en ce que**
le côté sortie des gaz de l'étage de haute température est relié à un premier système de refroidissement rapide des gaz, et à un deuxième système de refroidissement rapide des gaz agencé en aval du premier système de refroidissement rapide des gaz, dans le flux des gaz, les systèmes comportant respectivement un premier et un deuxième dispositif d'injection d'eau injectant de l'eau froide dans le flux chaud de gaz mélangés ou gaz d'échappement.

13. Dispositif selon la revendication précédente, **caractérisé en ce que** les premier et/ou deuxième dispositifs de refroidissement rapide des gaz comportent un dispositif de commande destiné à réguler la quantité ou le débit d'eau froide injectée dans le flux de gaz mélangés.

14. Dispositif selon la revendication précédente, **caractérisé en ce que** la quantité ou le débit d'eau froide injectée est réglable, de manière telle que le gaz de synthèse soit brutalement refroidi, lors du premier refroidissement rapide, à une température d'environ 150°C à 200°C, et/ou, lors du deuxième refroidissement rapide, à une température inférieure à 90°C.

15. Dispositif selon l'une des revendications 12 à 14, **caractérisé en ce que** les premier et/ou deuxième dispositifs d'injection d'eau comportent une multitude de gicleurs pour l'injection d'eau dans les premier et deuxième dispositifs de refroidissement rapide.

16. Dispositif selon la revendication précédente, **caractérisé en ce que** les gicleurs peuvent être mis en marche et arrêtés.

17. Dispositif selon l'une des revendications 12 à 16, **caractérisé en ce qu'**un système d'épuration des gaz est installé en aval du deuxième dispositif de refroidissement rapide des gaz.

18. Dispositif selon la revendication précédente, **caractérisé en ce que** le dispositif d'épuration des gaz comporte un étage d'épuration destiné à enlever le $H_2S$ au moyen de chélate de fer.

19. Dispositif selon l'une des revendications 12 à 18, **caractérisé en ce qu'**un dispositif de valorisation des gaz, par exemple un moteur à gaz, un générateur, ou similaire, est installé en aval du deuxième dispositif de refroidissement rapide des gaz pour le mélange de gaz de synthèse.

**20.** Dispositif selon l'une des revendications 12 à 19, **caractérisé en ce que** la chambre de réaction pour l'étage de basse température est constituée d'un four à poussoir disposé horizontalement, à chauffage externe, de section transversale rectangulaire, dont le rapport entre la largeur du four et la hauteur du four est supérieur à 2, la longueur du four étant donnée par la fonction $L_{four} \geq 5 \sqrt{F_{four}}$, où $F_{four}$ est l'aire de section du four à poussoir.

**21.** Dispositif selon l'une des revendications 12 à 20, **caractérisé en ce que** la chambre de réaction de l'étage de haute température est réalisée sous forme d'un four droit vertical dans lequel débouche, au-dessus de son fond, l'étage de basse température.

Verdichtung   Entgasung   Hochtemperaturvergasung   Synthesegasreinigung   Synthesegasnutzung
und Einschmelzung

FIG.1

EP 1 252 264 B1